# EUROPÄISCHE PATENTSCHRIFT

(11) **EP 0 887 095 B1**
(45) Veröffentlichungstag und Bekanntmachung des Hinweises auf die Patenterteilung: **31.08.2005**
(21) Anmeldenummer: 98111274.1
(22) Anmeldetag: 18.06.1998
(51) Int. Cl.: B01D 17/032, B01D 17/028, E03F 5/16

(54) **Flüssigkeitsabscheider**
Liquids separator
Séparateur de liquides

(30) Priorität: 25.06.1997 DE 29711083 U
(43) Veröffentlichungstag der Anmeldung: 30.12.1998
(73) Patentinhaber: Benkeser, Michael, 77886 Lauf (DE)
(72) Erfinder: Benkeser, Michael, 77886 Lauf (DE)
(74) Vertreter: Lasch, Hartmut

(56) Entgegenhaltungen:
- EP-A- 0 319 713
- EP-A- 0 522 265
- EP-A- 0 532 951
- DE-A- 19 501 470
- DE-B- 2 929 459
- FR-A- 2 667 514
- US-A- 4 132 238
- US-A- 5 365 970

## Beschreibung

Die Erfindung betrifft einen Flüssigkeitsabscheider insbesondere zum Trennen von Gemischen aus Wasser und spezifisch leichteren Flüssigkeiten wie Öl, Benzin, Fett oder dergleichen, mit einem Abscheiderbehälter, der einen Einlauf und einen Auslauf aufweist, und mit einem dem Auslauf vorgeschalteten Auslaufkanal, dessen stromauf gelegene Eintrittsöffnung mittels eines schwimmergesteuerten Verschlusses verschließbar ist, wobei der Schwimmer in einem Schwimmergehäuse angeordnet ist.

Zur Reinigung und Behandlung von gewerblichem Abwasser, insbesondere zum Trennen von Öl- bzw. Benzin-Wasser-Gemischen, werden üblicherweise Leichtflüssigkeitsabscheider verwendet, bei denen es sich einerseits um reine Schwerkraftabscheider handeln kann, in denen die spezifisch leichteren Anteile an die Oberfläche der im Flüssigkeitsabscheider befindlichen Flüssigkeit aufsteigen und sich dort ansammeln, während die spezifisch schwereren Teilchen auf den Boden des Abscheiderbehälters sinken. Andererseits sind auch sogenannte Koaleszenzabscheider bekannt, bei denen das zu reinigende Flüssigkeitsgemisch ein Koaleszenzfilter durchströmt, in dem die kleinen Leichtflüssigkeitströpfchen zurückgehalten werden und sich zu größeren Tropfen zusammenfinden, die dann an die Oberfläche aufsteigen.

Bei Betrieb des Flüssigkeitsabscheiders sammelt sich an der Oberfläche der im Abscheiderbehälter befindlichen Flüssigkeit eine Leichtflüssigkeitsschicht an, deren Dicke im Laufe der Zeit ständig zunimmt. Bei Erreichen eines vorbestimmten Dicken-Grenzwertes muß die abgeschiedene Leichtflüssigkeit aus dem Flüssigkeitsabscheider entfernt werden, was beispielsweise durch Absaugen erfolgen kann.

Um zuverlässig zu vermeiden, daß Leichtflüssigkeit bei einer relativ großen Dicke der Leichtflüssigkeitsschicht in den Auslauf gelangen kann, sind Flüssigkeitsabscheider in der Regel mit sogenannten selbsttätigen Verschlüssen versehen. Diese sind üblicherweise an einer Eintrittsöffnung eines zum Auslauf des Abscheiderbehälters führenden Auslaufkanals oder -rohres angeordnet, wobei die Eintrittsöffnung mit einer Verschlußplatte verschließbar ist. Die Verschlußplatte ist mit einem Schwimmer verbunden, der in Abhängigkeit von der Höhenlage der Grenzschicht zwischen der Leichtflüssigkeit und dem darunter befindlichen Wasser bewegt wird. Wenn die Leichtflüssigkeitsschicht anwächst, sinkt der Schwimmer nach unten. Bei Erreichen einer vorbestimmten Dicke der Leichtflüssigkeitsschicht legt sich die mit dem Schwimmer gekoppelte Verschlußplatte auf den als Ventilsitz wirkenden Rand der Eintrittsöffnung des Auslaßkanals und verschließt diese.

Um eine gute Reinigungsleistung des Flüssigkeitsabscheiders zu erzielen, muß gewährleistet sein, daß keine Leichtflüssigkeit in den Auslaufkanal gelangt. Da jedoch bei den bekannten Flüssigkeitsabscheidern im Bereich des schwimmergesteuerten Verschlusses keine definierten Strömungsverhältnisse vorliegen, kann es zu örtlichen turbulenten Strömungen kommen, durch die sehr feine Öltröpfchen gebildet werden, die aufgrund ihrer geringen Größe nicht an die Oberfläche aufsteigen können, sondern mit der Flüssigkeit in den Auslaufkanal gerissen werden. Auf diese Weise ist die Reinigungsleistung des Abscheiders deutlich herabgesetzt. US-4.132.238 A und FR-2.667.514 A offenbaren Flüssigkeitsabscheider, die dem Oberbegriff des Anspruchs 1 entsprechen.

Der Erfindung liegt die Aufgabe zugrunde, einen Flüssigkeitsabscheider der genannten Art zu schaffen, der eine verbesserte Reinigungsleistung aufweist.

Diese Aufgabe wird bei einem Flüssigkeitsabscheider gemäß Auspruch 1 gelöst. Das Schwimmergehäuse ist von einem im wesentlichen geschlossenen, auf die Eintrittsöffnung des Auslaufkanals aufgesetzten Hohlprofil gebildet und weist im Bereich einer sich im Abscheiderbehälter einstellenden Leichtflüssigkeitsschicht zumindest eine Ausgleichsöffnung und im unteren Bereich nahe der Eintrittsöffnung des Auslaufkanals eine separate Einströmöffnung auf.

Das Schwimmergehäuse in Form des im wesentlichen geschlossenen Hohlprofils dient der Erzielung definierter Strömungsverhältnisse auch im Bereich des schwimmergesteuerten Verschlusses. Das Schwimmergehäuse ist auf die Eintrittsöffnung aufgesetzt, so daß die Flüssigkeit nur durch die obere Ausgleichsöffnung und die untere Einströmöffnung in das Innere des Schwimmergehäuses und somit in den Auslaufkanal gelangen kann. Die obere Ausgleichsöffnung dient dabei lediglich dazu, einen Ausgleich zwischen der sich außerhalb des Schwimmerbehälters an der Oberfläche ansammelnden Leichtflüssigkeitsschicht und der im Schwimmergehäuse befindlichen Flüssigkeit herzustellen, so daß der Schwimmer bei anwachsender Dicke der Leichtflüssigkeitsschicht im Schwimmergehäuse nach unten sinkt und über die mit ihm gekoppelte Verschlußplatte die Eintrittsöffnung des Auslaufkanals verschließt.

Durch die untere Einströmöffnung, die möglichst tief, d.h. nahe an der Eintrittsöffnung des Auslaufkanals angeordnet ist, tritt die bereits gereinigte Flüssigkeit in das Schwimmergehäuse ein und gelangt so direkt in die Eintrittsöffnung des Auslaufkanals. Durch das geschlossene Schwimmergehäuse und die beiden in ihm ausgebildeten, sowohl räumlich als auch funktional deutlich getrennten Öffnungen und deren Größenverhältnis lassen sich im Bereich des schwimmergesteuerten Verschlusses definierte Strömungsverhältnisse erzielen, die zu einer deutlich verbesserten Reinigungsleistung führen.

Die geschlossene Ausgestaltung des Schwimmergehäuses ermöglicht es darüber hinaus, den Schwimmer auch in ihm zu führen. Zu diesem Zweck ist der Schwimmer vorzugsweise unter geringem Spiel in das als Hohlprofil ausgestattete Schwimmergehäuse eingesetzt, wobei als Hohlprofil ein Rohr mit einem Kreis-, Rechteck- oder Polygonquerschnitt Verwendung finden kann.

Um zu gewährleisten, daß die gereinigte Flüssigkeit, die in die Eintrittsöffnung des Auslaufkanals gelangt, durch die untere Einströmöffnung und nicht durch die obere Ausgleichsöffnung strömt, ist in Weiterbildung der Erfindung vorgesehen, daß der Querschnitt der unteren Einströmöffnung des Schwimmergehäuses wesentlich größer als der Querschnitt der Ausgleichsöffnung ist.

Besonders vorteilhafte Strömungsverhältnisse lassen sich erzielen, wenn die Größe der Einströmöffnung das 1,5- bis 2,0-fache der Größe der Eintrittsöffnung des Auslaufkanals beträgt, wodurch gewährleistet ist, daß an der unteren Einströmöffnung eine im wesentlichen laminare Strömung auftritt.

Die untere Einströmöffnung kann sich über den gesamten Umfang des Schwimmergehäuses erstrecken, vorzugsweise ist jedoch vorgesehen, daß sie sich nur über einen Umfangsabschnitt des Schwimmergehäuses, insbesondere etwa über den halben Umfang erstreckt. Durch die Ausrichtung der Einströmöffnung und deren Größe kann erreicht werden, daß nur Flüssigkeit aus einem Bereich des Abscheiderbehälters in die Einströmöffnung einströmen kann, in dem sich bereits ausreichend gereinigte Flüssigkeit befindet.

Um eventuell in der Flüssigkeit noch mitgeführte grobe Schwebstoffe zuverlässig an einem Eintritt in den Auslaßkanal hindern zu können, ist in Weiterbildung der Erfindung vorgesehen, daß die Einströmöffnung von einem Gittersieb überdeckt ist. Eine gleichartige Wirkung wird auch durch ein Lochblech, ein Maschengitter oder ein Drahtgeflecht erreicht. Darüber hinaus ergibt sich dadurch der weitere Vorteil einer Vergleichmäßigung der Strömung.

Es ist bekannt, im Abscheiderbehälter zumindest eine Leitwand vorzusehen, die zwischen dem Einlauf des Abscheiderbehälters und der Eintrittsöffnung des Ablaufkanals einen mehr oder minder genau definierten Strömungskanal bildet, so daß die in dem zu reinigenden Flüssigkeitsgemisch mitgeführte Leichtflüssigkeit ausreichend Zeit hat, an die Oberfläche aufzusteigen und sich dort anzusammeln. Besonders gute Reinigungsleistungen mit dem erfindungsgemäßen, im wesentlichen geschlossenen Schwimmergehäuse lassen sich erzielen, wenn die Leitwand spiralförmig verläuft, wobei das Schwimmergehäuse im Endbereich des Strömungskanals angeordnet ist. Vorzugsweise bildet die Leitwand einen sich von der Innenwandung des Abscheiderbehälters, d.h. dessen Außenbereich, spiralförmig zu dessen Zentrum erstreckenden Strömungskanal, wobei dann das Schwimmergehäuse im Zentrum des Abscheiderbehälters angeordnet ist.

Über die Variation der Lage der Einströmöffnung relativ zu der anströmenden Flüssigkeit läßt sich die Reinigungsleistung desweiteren beeinflußen. Besonders vorteilhaft ist es, wenn die Einströmöffnung auf der der anströmenden Flüssigkeit abgewandten Seite des Schwimmergehäuses angeordnet ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen Flüssigkeitsabscheider in Aufsicht
- Figur 2: den Flüssigkeitsabscheider gemäß Figur 1 in einem Vertikalschnitt und
- Figur 3: einen schwimmergesteuerten Verschluß in perspektivischer Darstellung.

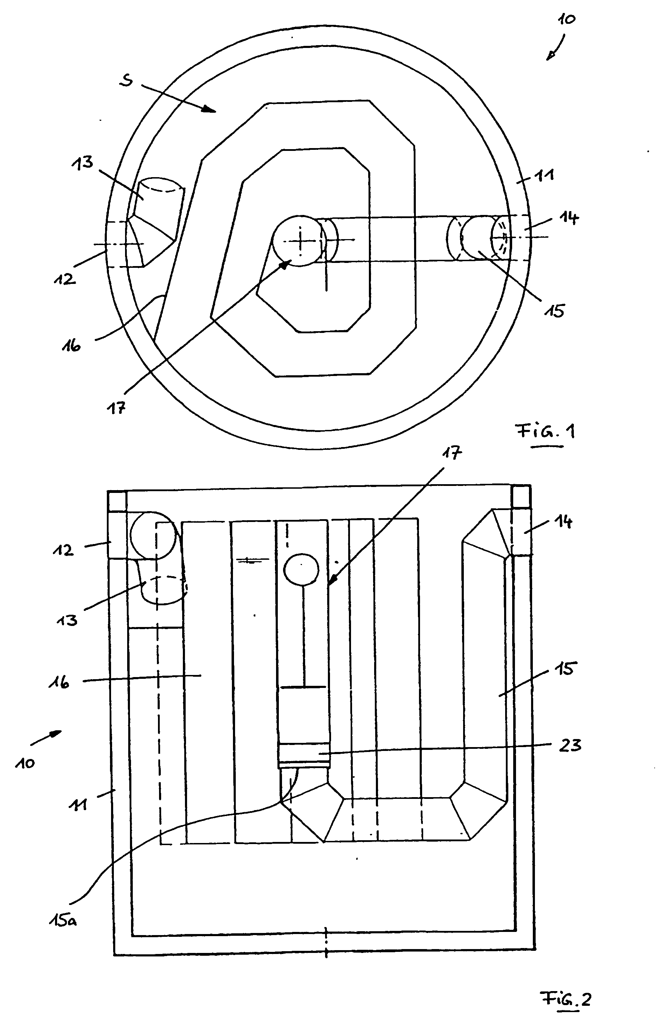

Gemäß den Figuren 1 und 2 weist ein Flüssigkeitsabscheider 10 einen Abscheiderbehälter 11 mit Kreisquerschnitt auf. Nahe der Oberseite des Abscheiderbehälters 11 ist ein Einlauf 12 vorgesehen, an dem sich eine Einlaufschikane 13 anschließt. Dem Einlauf 12 diametral gegenüberliegend ist im Abscheiderbehälter 11 ein Auslauf 14 vorgesehen, dem ein einen Auslaufkanal bildendes Steigrohr 15 vorgeschaltet ist.

Innerhalb des Abscheiderbehälters 11 ist eine polygonartig zusammengesetzte, spiralförmige Leitwand 16 vorgesehen, die einen entsprechend spiralförmigen Strömungskanal S bildet, der sich vom Einlauf 12 und somit der Innenwandung des Abscheiderbehälters 11 spiralförmig zu dessen Zentrum erstreckt. Bei dem gezeigten Ausführungsbeispiel besitzt der Strömungskanal S annähernd drei Windungen um das Zentrum des Abscheiderbehälters herum, jedoch können auch andere spiralförmige Strömungskanalausgestaltungen vorgesehen sein.

Im Zentrum des spiralförmigen Strömungskanals S ist ein schwimmergesteuerter Verschluß 17 vorgesehen, an dem die gereinigte Flüssigkeit durch eine Eintrittsöffnung 15a in das Steigrohr 15 einströmen und in diesem zum Auslauf 14 gelangen kann.

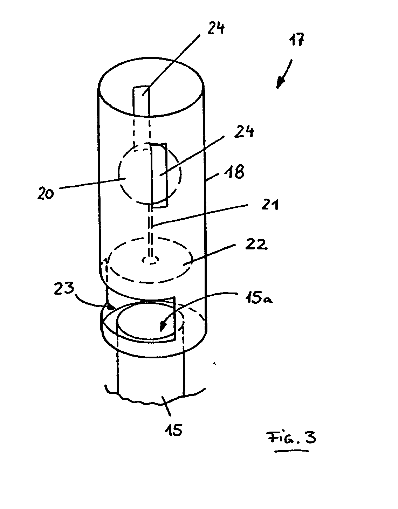

In Figur 3 ist der schwimmergesteuerte Verschluß 17 näher dargestellt. Ein rohrförmiges Schwimmergehäuse 18 mit einem Kreisquerschnitt ist an seinem unteren Ende auf die Eintrittsöffnung 15a des Steigrohrs 15 aufgesetzt. Das Schwimmergehäuse 18 ist im wesentlichen geschlossen und besitzt in seinem oberen Bereich, in dem sich bei Betrieb des Flüssigkeitsabscheiders die Leichtflüssigkeitsschicht einstellt, zwei diametral gegenüberliegende Ausgleichsöffnungen 24. In dem Schwimmergehäuse 18 ist ein Schwimmer 20 angeordnet, der an seinem unteren Ende über ein Gestänge 21 mit einer Verschlußplatte 22 versehen ist. Wenn sich bei Betrieb des Flüssigkeitsabscheiders in diesem und somit über die Ausgleichsöffnungen 24 auch im Schwimmergehäuse 18 eine Leichtflüssigkeitsschicht ansammelt, deren Dicke im Laufe der Zeit ständig zunimmt, verlagert sich eine untere Grenzschicht zwischen der Leichtflüssigkeitsschicht und dem darunter befindlichen Wasser allmählich nach unten, wodurch der Schwimmer 20 und somit die mit ihm verbundene Verschlußplatte 22 innerhalb des Schwimmergehäuses 18 absinken und die Eintrittsöffnung 15a des Steigrohres 15 verschließen.

Im unteren Bereich des Schwimmergehäuses 18 ist eine sich etwa über den halben Umfang des Schwimmergehäuses 18 erstreckende Einströmöffnung 23 ausgebildet, durch die das gereinigte Wasser im Bereich der Eintrittsöffnung 15a in das Schwimmergehäuse 18 und von diesem direkt in das Steigrohr 15 gelangen kann.

Wie Figur 3 zeigt, ist die Einströmöffnung 23 größer als die Eintrittsöffnung 15a des Steigrohres 15, wobei sich zur Erzielung von laminaren Strömungen die 1,5- bis 2,0-fache Größe für die Einströmöffnung 23 als vorteilhaft erwiesen hat.

## Patentansprüche

1. Flüssigkeitsabscheider insbesondere zum Trennen von Gemischen aus Wasser und spezifisch leichteren Flüssigkeiten wie Öl, Benzin, Fett und dergleichen, mit einem Abscheiderbehälter (11), der einen Einlauf (12) und einen Auslauf (14) aufweist, und mit einem dem Auslauf (14) vorgeschalteten Auslaufkanal (15), dessen stromauf gelegene Eintrittsöffnung (15a) mit einem mittels eines Schwimmers (20) gesteuerten Verschlusses (17) verschließbar ist, wobei der Schwimmer (20) in einem Schwimmergehäuse (18) angeordnet ist, das von einem im wesentlichen geschlossenen, auf die Eintrittsöffnung (15a) des Auslaufkanals (15) aufgesetzten Hohlprofil gebildet ist und im Bereich einer sich im Abscheiderbehälter (11) einstellenden Leichtflüssigkeitsschicht zumindest eine obere Ausgleichsöffnung (24) und im unteren Bereich nahe der Eintrittsöffnung (15a) des Auslaufkanals (15) eine separate Einströmöffnung (23) aufweist, **dadurch gekennzeichnet, dass** die Einströmöffnung (23) größer als die Eintrittsöffnung (15a) des Auslaufkanals (15) ist.

2. Flüssigkeitsabscheider nach Anspruch 1, **dadurch gekennzeichnet, dass** die Größe der Einströmöffnung (23) das 1,5- bis 2,0-fache der Größe der Eintrittsöffnung (15a) des Auslaufkanals (15) beträgt.

3. Flüssigkeitsabscheider nach Anspruch 1 oder 2, **dadurch gekennzeichnet, dass** sich die Einströmöffnung (23) nur über einen Umfangsabschnitt des Schwimmergehäuses (18) erstreckt.

4. Flüssigkeitsabscheider nach Anspruch 3, **dadurch gekennzeichnet, dass** sich die Einströmöffnung (23) über etwa den halben Umfang des Schwimmergehäuses (18) erstreckt.

5. Flüssigkeitsabscheider nach einem der Ansprüche 1 bis 4, **dadurch gekennzeichnet, dass** die Einströmöffnung von einem Gittersieb überdeckt ist.

6. Flüssigkeitsabscheider nach einem der Ansprüche 1 bis 5, **dadurch gekennzeichnet, dass** im Abscheiderbehälter (11) zumindest eine Leitwand (16) angeordnet ist, die zwischen dem Einlauf (12) und der Eintrittsöffnung (15a) des Ablaufkanals (15) einen definierten Strömungskanal (S) bildet.

7. Flüssigkeitsabscheider nach Anspruch 6, **dadurch gekennzeichnet, dass** die Leitwand (16) spiralförmig verläuft.

8. Flüssigkeitsabscheider nach Anspruch 7, **dadurch gekennzeichnet, dass** die Leitwand (16) einen sich von der Innenwandung des Abscheiderbehälters (11) spiralförmig zu dessen Zentrum erstreckenden Strömungskanal (S) bildet, wobei das Schwimmergehäuse (18) im Zentrum des Abscheiderbehälters (11) angeordnet ist.

9. Flüssigkeitsabscheider nach einem der Ansprüche 1 bis 8, **dadurch gekennzeichnet, dass** die Einströmöffnung (15) auf der der anströmenden Flüssigkeit abgewandten Seite des Schwimmergehäuses (18) ausgebildet ist.

10. Flüssigkeitsabscheider nach einem der Ansprüche 1 bis 9, **dadurch gekennzeichnet, dass** das Schwimmergehäuse (18) ein Rohr mit einem Kreis-, Rechteck- oder Polygonquerschnitt ist.

11. Flüssigkeitsabscheider nach einem der Ansprüche 1 bis 10, **dadurch gekennzeichnet, dass** der Querschnitt der Einströmöffnung (23) wesentlich größer als der der Ausgleichsöffnung (24) ist.

## Claims

1. Liquid separator, particularly for separating mixtures of water and specifically lighter liquids such as oil, petrol, grease and the like, having a separator chamber (11), provided with an inlet (12) and an outlet (14) and with a discharge duct (15) upstream of the outlet (14) and whose upstream intake port (15a) can be closed by a closure (17) controlled by means of a float (20), the latter being located in a float chamber (18), which is formed by a substantially closed hollow profile placed on the intake port (15a) of the discharge duct (15) and in the vicinity of a light liquid layer forming in the separator chamber (11) provided with at least one upper compensating opening (24) and in the lower area close to the intake port (15a) of the discharge duct (15) a separate inflow opening (23), **characterized in that** the inflow opening (23) is larger than the intake port (15a) of the discharge duct (15).

2. Liquid separator according to claim 1, **characterized in that** the size of the inflow opening (23) is 1.5 to 2.0 times the size of the intake port (15a) of the discharge duct (15).

3. Liquid separator according to claim 1 or 2, **characterized in that** the inflow port (23) only extends over a circumferential portion of the float chamber (18).

4. Liquid separator according to claim 3, **characterized in that** the inflow opening (23) extends over roughly half the circumference of the float chamber (18).

5. Liquid separator according to one of the claims 1 to 4, **characterized in that** the inflow opening is covered by a lattice screen.

6. Liquid separator according to one of the claims 1 to 5, **characterized in that** in the separator chamber (11) is located at least one guide wall (16), which between the inlet (12) and the intake port (15a) of the discharge duct (15) forms a clearly defined flow channel (S).

7. Liquid separator according to claim 6, **characterized in that** the guide wall (16) has a spiral configuration.

8. Liquid separator according to claim 7, **characterized in that** the guide wall (16) forms a flow channel (S) extending spirally from the inner wall of the separator chamber (11) to the centre thereof, the float chamber (18) being located in the centre of the separator chamber (11).

9. Liquid separator according to one of the claims 1 to 8, **characterized in that** the inflow opening (15) is formed on the side of the float chamber (18) remote from the inflowing liquid.

10. Liquid separator according to one of the claims 1 to 9, **characterized in that** the float chamber (18) is a tube having a circular, rectangular or polygonal cross-section.

11. Liquid separator according to one of the claims 1 to 10, **characterized in that** the cross-section of the inflow opening (23) is much larger than that of the compensating opening (24).

## Revendications

1. Séparateur de liquides, en particulier pour la séparation de mélanges d'eau et de liquides spécifiquement plus légers tels que l'huile, l'essence la graisse ou similaires, comprenant un récipient de séparateur (11) présentant une entrée (12) et une évacuation (14), et un canal d'évacuation (15) disposé en amont de l'évacuation (14), dont l'ouverture d'entrée (15a) située en amont peut être fermée par un obturateur (17) commandé par l'intermédiaire d'un flotteur (20), le flotteur (20) étant disposé dans un carter de flotteur (18), constitué par un profilé creux en majorité fermé disposé sur l'ouverture d'entrée (15a) du canal d'évacuation (15), et qui présente, dans la zone d'une couche de liquide léger se formant dans le récipient de séparateur (11), au moins une ouverture supérieure de compensation (24) et dans la zone inférieure à proximité de l'ouverture d'entrée (15a) du canal d'évacuation (15) une ouverture d'admission (23) séparée, **caractérisé en ce que** l'ouverture d'admission (23) est plus grande que l'ouverture d'entrée (15a) du canal d'évacuation (15).

2. Séparateur de liquides selon la revendication 1, **caractérisé en ce que** la dimension de l'ouverture d'admission (23) est de 1,5 fois à 2 fois la dimension de l'ouverture d'entrée (15a) du canal d'évacuation (15).

3. Séparateur de liquides selon la revendication 1 ou 2, **caractérisé en ce que** l'ouverture d'admission (23) ne s'étend que sur une zone de la périphérie du carter de flotteur (18).

4. Séparateur de liquides selon la revendication 3, **caractérisé en ce que** l'ouverture d'admission (23) s'étend sur environ la moitié de la périphérie du carter de flotteur (18).

5. Séparateur de liquides selon l'une quelconque des revendications 1 à 4, **caractérisé en ce que** l'ouverture d'admission est recouverte d'un tamis à treillis.

6. Séparateur de liquides selon l'une quelconque des revendications 1 à 5, **caractérisé en ce que** dans le récipient de séparateur (11) est disposé au moins une paroi de guidage (16) qui constitue entre l'entrée (12) et l'ouverture d'entrée (15a) du canal d'évacuation (15) un canal d'écoulement (S) défini.

7. Séparateur de liquides selon la revendication 6, **caractérisé en ce que** la paroi de guidage (16) s'étend à la manière d'une spirale.

8. Séparateur de liquides selon la revendication 7, **caractérisé en ce que** la paroi de guidage (16) forme un canal d'écoulement (S) s'étendant en forme de spirale à partir de la paroi interne du récipient de séparateur (11) jusqu'au centre de celui-ci, le carter de flotteur (18) étant disposé au centre du récipient de séparateur (11).

9. Séparateur de liquides selon l'une quelconque des revendications 1 à 8, **caractérisé en ce que** l'ouverture d'admission (15) est ménagée dans la face du carter de flotteur (18) opposée au liquide affluent.

10. Séparateur de liquides selon l'une quelconque des revendications 1 à 9, **caractérisé en ce que** le carter de flotteur (18) est un tuyau de section circulaire, rectangulaire ou polygonale.

11. Séparateur de liquides selon l'une quelconque des revendications 1 à 10, **caractérisé en ce que** le diamètre de l'ouverture d'admission (23) est sensiblement supérieur à celui de l'ouverture de compensation (24).
